(19) Europäisches Patentamt
European Patent Office
Office européen des brevets

(11) Veröffentlichungsnummer: **0 443 133 A2**

# (12) EUROPÄISCHE PATENTANMELDUNG

(21) Anmeldenummer: **90123882.4**

(22) Anmeldetag: **12.12.90**

(51) Int. Cl.[5]: **C08G 64/10**, C08G 64/18, C08G 64/14, C08G 64/28, C08L 69/00, G02B 1/04

(30) Priorität: **24.01.90 DE 4001933**

(43) Veröffentlichungstag der Anmeldung: **28.08.91 Patentblatt 91/35**

(84) Benannte Vertragsstaaten: **BE CH DE FR GB IT LI NL**

(71) Anmelder: **BAYER AG**

**W-5090 Leverkusen 1 Bayerwerk(DE)**

(72) Erfinder: **Ebert, Wolfgang, Dr.**
**Doerperhofstrasse 31**
**W-4150 Krefeld(DE)**
Erfinder: **Negele, Michael, Dr.**
**Wolfskaul 6**
**W-5000 Köln 80(DE)**
Erfinder: **Fennhoff, Gerhard, Dr.**
**Buschstrasse 25**
**W-4156 Willich 2(DE)**

## (54) Aromatische Polycarbonate mit einer speziellen fluorhaltigen Bisphenolkomponente, deren Herstellung und Verwendung.

(57) Neue aromatische Polycarbonate enthalten in ihrem Bisphenolanteil zumindest teilweise Bisphenole des Typs 1,1-Bishydroxyphenyl-hexafluordichlor-, -heptafluormonochlor- oder -octafluorcyclopentan.

EP 0 443 133 A2

Rank Xerox (UK) Business Services

## AROMATISCHE POLYCARBONATE MIT EINER SPEZIELLEN FLUORHALTIGEN BISPHENOLKOMPONENTE, DEREN HERSTELLUNG UND VERWENDUNG

Die vorliegende Erfindung betrifft neue aromatische Polycarbonate mit einer speziellen fluorhaltigen Bisphenolkomponente, deren Herstellung und deren Verwendung.

Bekannt sind Homopolycarbonate mit 2,2-Bis-(4-hydroxyphenyl)-1,1,1,3,3,3-hexafluorpropan als Bisphenolkomponente (siehe Christopher und Fox, Polycarbonates, Reinhold Publ. Corp. New York 1962, S. 163 und SU-PS 132 403) und entsprechende Copolycarbonate (siehe EP-OS 29 111). Bekannt sind auch Blockcopolycarbonate aus aromatischen Carbonatstruktureinheiten und aliphatischen Polyether-, Polyester-, Polyurethan- oder Polyolefin-Struktureinheiten. Die aromatischen Carbonatstruktureinheiten können dabei aus fluorierten Diphenolalkanen bestehen (siehe DE-AS 11 62 559). Die GB-PS 11 41 716 beschreibt aromatische Polycarbonate mit fluorierter Bisphenol-Komponente, wobei als fluoriertes Bisphenol u.a. 2,2-Bis-(4-hydroxyphenyl)-hexafluorpropan angeführt wird.

Derartige Polycarbonate weisen Brechungsindices auf, die für Anwendungen im optischen Bereich häufig zu hoch sind.

Es wurden nun neue aromatische Polycarbonate der Formel (I) gefunden

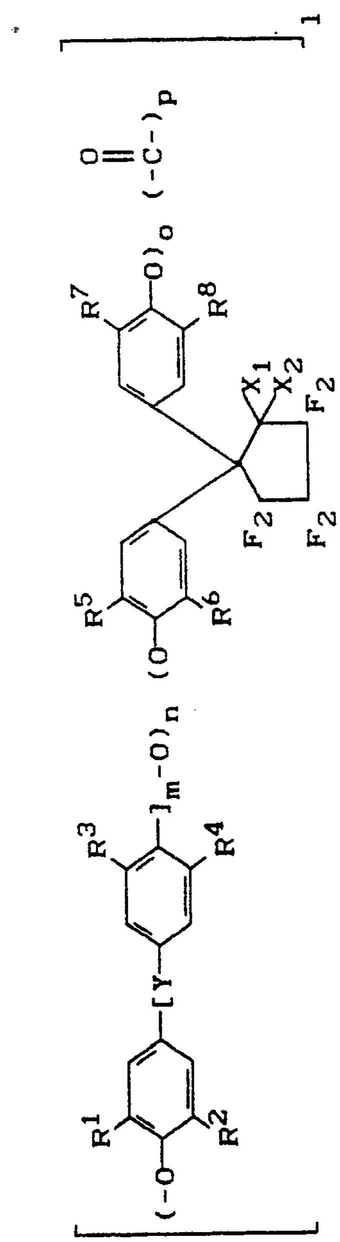

(I),

in der

| | |
|---|---|
| l | für eine ganze Zahl von 2 bis 600 steht, |
| n, o und p | für die Molzahlen der jeweiligen Komponenten stehen und folgende Bedingungen erfüllen $n + o = p$ und $o:(n + o) = 0{,}01$ bis 1, |
| m | für Null oder 1 steht, |
| $R^1$ bis $R^4$ | unabhängig voneinander jeweils für Wasserstoff, $C_1$-$C_5$-Alkyl oder Halogen stehen, |
| Y | eine Einfachbindung, Sauerstoff, Schwefel, $SO_2$ oder eine $C_1$-$C_8$-Alkylen-, $C_2$-$C_8$-Alkyliden-, $C_3$-$C_{12}$-Cycloalkylenalkyliden-, $C_7$-$C_{18}$-Aralkylen oder $C_7$-$C_{18}$-Aralkylidengruppe bedeutet, |
| $X_1$ und $X_2$ | unabhängig voneinander für Fluor oder Chlor stehen und |
| $R^5$ bis $R^8$ | unabhängig voneinander jeweils für Wasserstoff, $C_1$-$C_5$-Alkyl, Benzyl, Phenyl, $C_1$-$C_5$-Alkoxy, Benzyloxy, Phenyloxy oder Halogen stehen. |

Bevorzugte aromatische Polycarbonate der Formel (I) sind dadurch gekennzeichnet, daß

| | |
|---|---|
| l | für eine ganze Zahl von 4 bis 400 steht, |
| n, o und p | folgende Bedingungen erfüllen $n + o = p$ und $o:(n + o) = 0{,}05$ bis 1, |
| m | für 1 steht, |
| $R^1$ bis $R^4$ | unabhängig voneinander jeweils für Wasserstoff, Methyl, Chlor oder Brom stehen, |
| Y | Schwefel, $SO_2$, eine $C_1$-$C_8$-Alkylen-, $C_2$-$C_8$-Alkyliden-, $C_5$-$C_6$-Cycloalkylen-, $C_5$-$C_6$-Cyclohexyliden-, $C_7$-$C_{15}$-Aralkylen-oder $C_7$-$C_{15}$-Aralkylidengruppe bedeutet, |
| $X_1$ und $X_2$ | für Fluor stehen und |
| $R^5$ bis $R^8$ | unabhängig voneinander für Wasserstoff, Methyl, Methoxy, Chlor oder Brom stehen. |

Besonders bevorzugte aromatische Polycarbonate der Formel (I) sind dadurch gekennzeichnet, daß

| | |
|---|---|
| l | für eine ganze Zahl von 24 bis 300 steht, |
| n, o und p | folgende Bedingungen erfüllen $n + o = p$ und $o:(n+o) = 0{,}1$ bis 1, |
| m | für 1 steht, |
| $R^1$ bis $R^4$ | unabhängig voneinander für Wasserstoff oder Methyl stehen, |
| Y | Schwefel, $SO_2$, eine $C_1$-$C_5$-Alkylen-, $C_2$-$C_5$-Alkyliden-, Cyclohexylen-, Cyclohexyliden-, $C_7$-$C_{13}$-Aralkylen- oder $C_7$-$C_{13}$-Aralkylidengruppe bedeutet, |
| $X_1$ und $X_2$ | für Fluor stehen und |
| $R^5$ bis $R^8$ | unabhängig voneinander für Wasserstoff oder Methyl stehen. |

Die erfindungsgemäßen Polycarbonate der Formel (I) können, soweit sie aus mehreren Bisphenolen aufgebaut sind, unterschiedliche Bisphenoleinheiten in Form von Blöcken oder in statistischer Verteilung enthalten.

Es ist ein wesentliches Merkmal erfindungsgemäßer Polycarbonate, daß ihr Bisphenolanteil zumindest teilweise aus Bisphenolen des Typs 1,1-Bishydroxyphenyl-hexafluordichlor- oder -heptafluormonochlor- oder -octafluorcyclopentan stammt.

Die vorliegende Erfindung betrifft weiterhin ein Verfahren zur Herstellung von Polycarbonaten der Formel (I), das dadurch gekennzeichnet ist, daß man

o Mole Bisphenole der Formel (II)

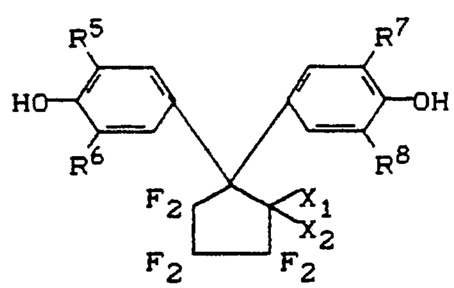
(II),

in der die verwendeten Symbole die bei Formel (I) angegebene Bedeutung haben,

gegebenenfalls unter Zusatz von n Molen Bisphenolen der Formel (III)

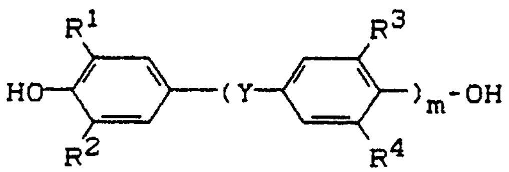

(III),

in der die verwendeten Symbole die bei Formel (I) angegebene Bedeutung haben,
mit mindestens p Molen Phosgen, $COBr_2$ und/oder einem Bischlorkohlensäureester
gegebenenfalls unter Zusatz von Katalysatoren, Kettenabbrechern und/oder Verzweigungsmitteln
umsetzt und dabei die Bedingungen einhält
$n + o \geqq p$
$o: (n + o) = 0{,}01$ bis 1.

Bevorzugt sind Bisphenole der Formel (II), bei denen die verwendeten Symbole die bei Formel (I) als bevorzugt angegebene Bedeutung haben.

Besonders bevorzugte Bisphenole der Formel (II) sind 1,1-Bis-(4-hydroxyphenyl)-octafluorcyclopenten und 1,1-Bis-(3,5-dimethyl-4-hydroxyphenyl)- octafluorcyclopenten.

Bisphenole der Formel (II) können erhalten werden, indem man ein fluorhaltiges Cyclopentanon der Formel (IIa)

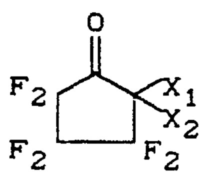

(IIa),

in der
$X_1$ und $X_2$ unabhängig voneinander für Fluor oder Chlor stehen,
mit wenigstens der 2-fachen molaren Menge einer oder mehrerer Arylverbindungen der Formel (IIb)

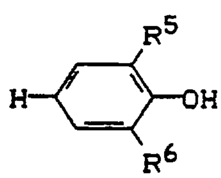

(IIb),

in der
$R^5$ und $R^6$ die bei Formel (I) angegebene Bedeutung haben,
in Gegenwart von wasserfreier Flußsäure umsetzt.

Fluorhaltige Cyclopentanone der Formel (II) sind beispielsweise gemäß J. Org. Chem. 33, 2693 (1968) oder aus den US-PS'en 3 129 248, 3 341 602 und 3 321 515 zugänglich.

Die Bisphenole der Formel (II) und ein Verfahren zu ihrer Herstellung sind von einer eigenen separaten Patentanmeldung umfaßt.

Bisphenole der Formel (III) sind bekannt. Als Beispiele seien genannt: Bis-(4-hydroxyphenyl)-methan, 2,2-Bis-(4-hydroxyphenyl)-propan, 1,1-Bis-(4-hydroxyphenyl)-cyclohexan, 1,1-Bis-(4-hydroxy-3,5-dimethylphenyl)-cyclohexan, 1,1-Bis-(4-hydroxyphenyl)-1-phenylethan, 2,2-Bis-(4-hydroxyphenyl)-butan, 2,2-Bis-(4-hydroxyphenyl)-pentan, 3,3-Bis-(4-hydroxyphenyl)-pentan, 2,2-Bis-(4-hydroxyphenyl)-hexan, 3,3-Bis-(4-hydroxyphenyl)-hexan, 2,2-Bis-(3,5-dichlor-4-hydroxyphenyl)-propan, 2,2-Bis-(3,5-dibrom-4-hydroxyphenyl)-propan, Bis-(4-hydroxyphenyl)-phenylmethan, 2,2-Bis-(4-hydroxy-3,5-dimethylphenyl)-propan und 2,2-Bis-(4-hydroxyphenyl)-diphenylmethan.

Besonders bevorzugte Bisphenole der Formel (III) sind: 2,2-Bis-(4-hydroxyphenyl)-propan, 1,1-Bis-(4-hydroxyphenyl)-cyclohexan, 2,2-Bis-(4-hydroxy-3,5-dimethylphenyl)-propan, 2,2-Bis-(4-hydroxyphenyl)-diphenylmethan, Bis-(4-hydroxyphenyl)-sulfid und Bis-(4-hydroxyphenyl)-sulfon.

Vorzugsweise wird beim erfindungsgemäßen Verfahren die Bedingung o: (n + o) = 0,1 bis 1 eingehalten.

Als Katalysatoren kommen gegebenenfalls solche in Frage, die bei der Polycarbonatherstellung üblich sind, beispielsweise tertiäre Amine und quarternäre Ammoniumsalze. Katalysatoren kann man beispielsweise in Mengen von 0,1 bis 10 Mol-%, bezogen auf Bisphenole der Formeln (II) und (III), einsetzen. Bevorzugt liegt diese Menge im Bereich 0,5 bis 5 Mol-%.

Als Kettenabbrecher kommen gegebenenfalls solche in Frage, die bei der Polycarbonatherstellung üblich sind, beispielsweise Monophenole wie Phenol, p-tert.-Butylphenol, p-Kresol, p-Chlorphenol und p-Bromphenol. Kettenabbrecher kann man beispielsweise in Mengen von 0,5 bis 8 Mol-%, vorzugsweise 2 bis 6 Mol-%, bezogen auf eingesetzte Bisphenole, einsetzen.

Als Verzweigungsmittel kommen gegebenenfalls solche in Frage, die bei der Polycarbonatherstellung üblich sind, beispielsweise Tri- und Tetraphenole, sowie Tricarbonsäuretrichloride und Tetracarbonsäuretetrachloride. Verzweigungsmittel kann man beispielsweise in Mengen von 0,05 bis 3,5 Mol-%, vorzugsweise 0,1 bis 1,5 Mol-%, bezogen auf eingesetzte Bisphenole, einsetzen.

Bei der erfindungsgemäßen Herstellung der neuen aromatischen Polycarbonate kann man bei der Polycarbonat-Herstellung übliche Arbeitsweisen anwenden (siehe z.B. Ullmann, Encyclopädie der technischen Chemie, 4. Auflage, Band 19, Seiten 55 bis 57), beispielsweise das Phasengrenzflächenverfahren, das Pyridinverfahren oder das Umesterungsverfahren.

Beim bevorzugten Phasengrenzflächenverfahren kann man beispielsweise so vorgehen, daß man zunächst das oder die Bisphenole der Formeln (II) und gegebenenfalls (III) mit einer wäßrig-alkalischen Lösung zusammenbringt, dann ein Lösungsmittel für Polycarbonate zufügt, dann unter Rühren bei Temperaturen von beispielsweise 0 bis 100 °C Phosgen, $COBr_2$ oder einen Bischlorkohlensäureester zufügt, dabei den pH-Wert des Reaktionsgemisches auf 10 oder höher hält und, gegebenenfalls nach Waschen der organischen Phase, das gebildete Carbonat gewinnt, indem man es aus der organischen Phase ausfällt oder das Lösungsmittel ganz oder teilweise verdampft bzw. abzieht.

Die wäßrig-alkalische Lösung kann man z.B. mit Alkali- und/oder Erdalkalihydroxiden herstellen. Geeignete Lösungsmittel für Polycarbonate sind z.B. chlorierte Kohlenwasserstoffe wie Methylenchlorid, Chloroform, Ethylenchlorid und Chlorbenzol, sowie Mischungen davon. Der Einsatz von Phosgen ist gegenüber dem Einsatz von $COBr_2$ und Bischlorkohlensäureestern bevorzugt. Der pH-Wert wird am einfachsten auf einen Wert von 10, vorzugsweise 12, oder darüber gehalten, wenn man einen entsprechenden Überschuß an wäßrig-alkalischer Lösung einsetzt, d.h. entsprechend mehr als zur Bildung der Bisphenolate theoretisch notwendig ist.

Beim Pyridinverfahren kann man beispielsweise so vorgehen, daß man die Bisphenole der Formeln (II) und gegebenenfalls (III) in einem Lösungsmittel löst, die stöchiometrisch erforderliche Menge eines tertiären Amins oder einen Überschuß davon zugibt, in diese homogene Lösung unter Rühren bei Temperaturen von beispielsweise 0 bis 50 °C Phosgen einleitet, danach das gebildete Hydrochlorid des tertiären Amins abtrennt und aus der verbleibenden organischen Phase das gebildete Polycarbonat gewinnt, indem man es ausfällt oder das Lösungsmittel ganz oder teilweise verdampft bzw. abzieht. Geeignete Lösungsmittel sind solche, die auch beim Phasengrenzflächenverfahren angewendet werden können. Bevorzugt wird als tertiäres Amin Pyridin verwendet, man kann aber auch andere tertiäre Amine, beispielsweise N,N-Dimethylanilin oder N,N-Dimethylcyclohexylamin einsetzen.

Beim Umesterungsverfahren kann man beispielsweise so vorgehen, daß man das oder die Bisphenole der Formeln (II) und gegebenenfalls (III) zusammen mit einem Diarylcarbonat und einem Umesterungskatalysator in einem Autoklaven aufschmilzt und bei vermindertem Druck und erhöhter Temperatur die aus dem Diarylcarbonat freiwerdende Hydroxyarylverbindung abdestilliert. Als Diarylcarbonat kommt vorzugsweise Diphenylcarbonat zum Einsatz, aus dem dann Phenol frei wird, beispielsweise bei Drucken bis hinab zu 0,5 mbar und Temperaturen bis zu 300 °C.

Erfindungsgemäße aromatische Polycarbonate können z.B. mittlere Gewichtsmittelmolekulargewichte $M_W$ zwischen 500 und 250 000 aufweisen, ermittelt über $\eta$rel gemessen an einer 5 %igen Lösung in Methylenchlorid bei 25 °C. Vorzugsweise liegt $M_W$ zwischen 1 000 und 170 000, besonders bevorzugt zwischen 10 000 und 80 000.

Erfindungsgemäße aromatische Polycarbonate zeichnen sich überraschenderweise durch einen niedrigen Brechungsindex und eine hohe Glasübergangstemperatur aus, was sie für Anwendungen im optischen Bereich besonders geeignet macht. Die Wärmeformbeständigkeit erfindungsgemäßer aromatischer Polycarbonate ist in etwa gleich wie bei anderen Polycarbonaten, z.B. solchen auf der Basis von Bisphenol A.

Die vorliegende Erfindung betrifft deshalb auch die Verwendung von aromatischen Polycarbonaten der Formel (I) bei der Herstellung optischer Vorrichtungen, beispielsweise bei der Herstellung von Compact Discs und Lichtleitern. Bei der Herstellung von Lichtleitern mit den erfindungsgemäßen Polycarbonaten können diese insbesondere als Claddings verwendet werden, wobei als Kernmaterial bekannte Polycarbonate (mit höherem Brechungsindex) verwendet werden können.

Erfindungsgemäße aromatische Polycarbonate sind stark hydrophobiert und können deshalb auch dort mit Vorteil angewendet werden, wo es auf geringe Wasseraufnahme und hohe Dimensionsstabilität ankommt, z.B. im Automobilbau oder bei Folien.

Den erfindungsgemäßen aromatischen Polycarbonaten können, je nach vorgesehener Verwendung, diverse Additive zugesetzt werden. So können beispielsweise Pigmente zugesetzt werden, um opak gefärbte Formmassen zu erhalten. Geeignete Pigmente sind beispielsweise Titandioxid, Chromgelb, Chromorange und Chromgrün. Auch öllösliche Farbstoffe können zugemischt werden. Ferner können Stabilisatoren, beispielsweise solche gegen Hitze und/oder Lichteinwirkung (siehe z.B. EP-OS 143 906 und DE-OS 2 255 639) und/oder Füllstoffe, beispielsweise Glasfasern, zugesetzt werden.

Erfindungsgemäße aromatische Polycarbonate können gegebenenfalls mit anderen Thermoplasten, beispielsweise mit anderen thermoplastischen Polycarbonaten oder mit ABS-Polymerisaten abgemischt werden.

Die erfindungsgemäßen aromatischen Polycarbonate und sie enthaltende Abmischungen mit anderen Thermoplasten können in an sich bekannter Weise zu Formkörpern und zu Folien verarbeitet werden.

## Beispiele

Die im folgenden jeweils angegebene relative Viskosität $\eta_{rel}$ wurde jeweils an Lösungen von 0,5 g Polymer in 100 ml Methylenchlorid bei 25 °C bestimmt. Die im folgenden ebenfalls angegebenen Schmelzviskositäten $\eta_{melt}$ wurden bei 300 °C gemessen.

### Beispiel 1

In einen 1 l-Glaskolben, versehen mit Rückflußkühler, Rührer, Thermometer und Einleitungsrohr, wurden 19,9 g (0,05 Mol) 1,1-Bis-(4-hydroxyphenyl)-octafluorcyclopentan (98 % rein), 10 g (0,25 Mol) Natriumhydroxid, 200 ml destilliertes Wasser und 200 ml Methylenchlorid bei 18 °C vorgelegt und innerhalb von 20 Minuten 7,5 g (0,075 Mol) Phosgen eingeleitet. Anschließend wurde 1 Mol-% (bezogen auf das Bisphenol) N-Ethylpyridin als Katalysator zugegeben und 1 Stunde bei 20 °C nachgerührt. Anschließend wurde mit Phosphorsäure angesäuert und die organische Phase mit destilliertem Wasser neutral gewaschen. Die organische Phase wurde getrocknet und eingeengt (12 Stunden bei 60 °C und 10 mbar). So wurden 16,1 g Polycarbonat erhalten. Das Produkt wies folgende Merkmale auf:

$\eta_{rel}$ = 1,157
$\eta_{melt}$ = 210 Pa.s
$T_g$ = 155,5 °C
Brechungsindex $n_D^{20}$ = 1,540.

### Beispiel 2

Es wurde verfahren wie in Beispiel 1, jedoch wurde hochgereinigtes, 99,9% reines 1,1-Bis-(4-hydroxyphenyl)-octafluorcyclopentan eingesetzt. Es wurden 14,7 g Polycarbonat mit $\eta_{rel}$ = 2,335 erhalten.

### Beispiel 3

Es wurde verfahren wie in Beispiel 1, jedoch wurden 19,9 g (0,05 Mol) 1,1-Bis-(4-hydroxyphenyl)-octafluorcyclopentan, 11,4 g (0,05 Mol) 2,2-Bis-(4-hydroxyphenyl)-propan, 20 g Natriumhydroxid, 400 ml destilliertes Wasser, 400 ml Methylenchlorid, 300 mg p-tert.-Butylphenol, 15 g (0,15 Mol) Phosgen und 1 Mol-% N-Ethylpiperidin eingesetzt. Es wurden 27,5 g Polycarbonat mit folgenden Merkmalen erhalten:

$\eta_{rel}$ = 1,207
$\eta_{melt}$ = 120 Pa.s
$T_g$ = 151,5 °C
Brechungsindex $n_D^{20}$ = 1,507

Beispiel 4

Es wurde verfahren wie in Beispiel 3, jedoch wurden 450 mg p-tert.-Butylphenol als Kettenabbrecher eingesetzt. Es wurden 33,4 g Polycarbonat mit folgenden Merkmalen erhalten:

$\eta_{rel}$ = 1,152
$\eta_{melt}$ = 82 Pa.s
$T_g$ = 154° C
Brechungsindex $n_D^{20}$ = 1,510

Beispiel 5

Herstellung von 1,1-Bis-(4-hydroxyphenyl)-octafluorcyclopentan (nicht erfindungsgemäß)

684 g (3,0 Mol) Octafluorcyclopentanon wurden in 1700 ml wasserfreier Flußsäure in einem 5 l fassenden Rührkessel aus V4A-Stahl mit Druckhaltung bei 5° C (Eiskühlung) vorgelegt. Nach Zugabe von 575 g (6,1 Mol) Phenol wurde die Reaktionstemperatur auf 25 bis maximal 40° C gesteigert und 6 Stunden lang gerührt. Anschließend wurde die Flußsäure bei maximal 100 mbar und 50° C abdestilliert und der gelblich-weiße Rückstand (ca. 1200 g) mit Wasser weitgehend säurefrei gewaschen. Das Rohprodukt hatte nach dem Trocknen einen Schmelzpunkt von 164 bis 167° C.

Zur weiteren Reinigung wurde das getrocknete Material in 2000 ml 5%iger wäßriger Natronlauge gelöst und durch Einrühren von 10%iger Salzsäure wieder ausgefällt. Nach Absaugen und Trocknen wurden 1140 g (2,86 Mol) analytisch reines Material mit einem Schmelzpunkt von 168 bis 170° C erhalten. Die Ausbeute nach dem Umfällen betrug, bezogen auf eingesetztes Octafluorcyclopentanon, 95,3%.

## Patentansprüche

**1.** Aromatische Polycarbonate der Formel (I)

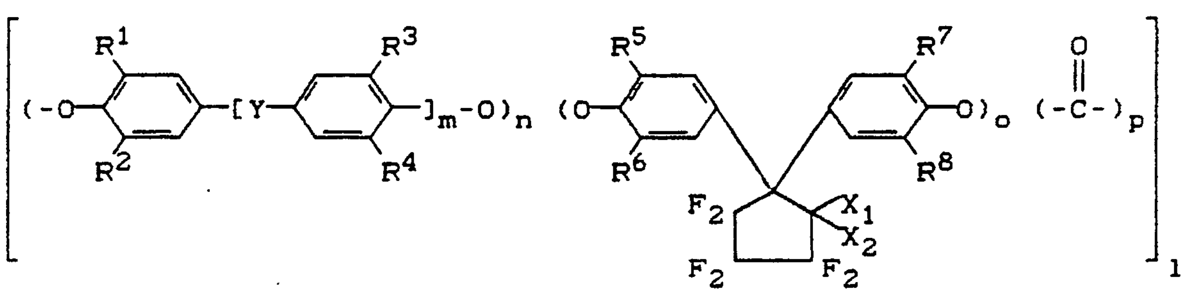

(I)

in der

| | |
|---|---|
| l | für eine ganze Zahl von 2 bis 600 steht, |
| n, o und p | für die Molzahlen der jeweiligen Komponenten stehen und folgende Bedingungen erfüllen<br><br>n + o = p und<br>o: (n + o) = 0,01 bis 1, |
| m | für Null oder 1 steht, |
| $R^1$ bis $R^4$ | unabhängig voneinander jeweils für Wasserstoff, $C_1$-$C_5$-Alkyl oder Halogen stehen, |
| Y | eine Einfachbindung, Sauerstoff, Schwefel, $SO_2$ oder eine $C_1$-$C_8$-Alkylen-, $C_2$-$C_8$-Alkyliden-, $C_3$-$C_{12}$-Cycloalkylenalkyliden-, $C_7$-$C_{18}$-Aralkylen oder $C_7$-$C_{18}$-Aralkylidengruppe bedeutet, |
| $X_1$ und $X_2$ | unabhängig voneinander für Fluor oder Chlor stehen und |
| $R^5$ bis $R^8$ | unabhängig voneinander jeweils für Wasserstoff, $C_1$-$C_5$-Alkyl, Benzyl, Phenyl, $C_1$-$C_5$-Alkoxy, Benzyloxy, Phenyloxy oder Halogen stehen. |

**2.** Aromatische Polycarbonate gemäß Anspruch 1, dadurch gekennzeichnet, daß

l für eine ganze Zahl von 4 bis 400 steht,
n, o und p folgende Bedingungen erfüllen

n + o = p und
o: (n + o) = 0,05 bis 1,

m für 1 steht,
$R^1$ bis $R^4$ unabhängig voneinander jeweils für Wasserstoff, Methyl, Chlor oder Brom stehen,
Y Schwefel, $SO_2$, eine $C_1$-$C_8$-Alkylen-, $C_2$-$C_8$-Alkyliden-, $C_5$-$C_6$-Cycloalkylen-, $C_5$-$C_6$-Cyclohexyliden-, $C_7$-$C_{15}$-Aralkylen- oder $C_7$-$C_{15}$-Aralkylidengruppe bedeutet,
$X_1$ und $X_2$ für Fluor stehen und
$R^5$ bis $R^8$ unabhängig voneinander für Wasserstoff, Methyl, Methoxy, Chlor oder Brom stehen.

3. Aromatische Polycarbonate gemäß Ansprüchen 1 und 2, dadurch gekennzeichnet, daß
l für eine ganze Zahl von 24 bis 300 steht,
n, o und p folgende Bedingungen erfüllen
n + o = p und
o:(n+o) = 0,1 bis 1,
m für 1 steht,
$R^1$ bis $R^4$ unabhängig voneinander für Wasserstoff oder Methyl stehen,
Y Schwefel, $SO_2$, eine $C_1$-$C_5$-Alkylen-, $C_2$-$C_5$-Alkyliden-, Cyclohexylen-, Cyclohexyliden-, $C_7$-$C_{13}$-Aralkylen- oder $C_7$-$C_{13}$-Aralkylidengruppe bedeutet,
$X_1$ und $X_2$ für Fluor stehen und
$R^5$ bis $R^8$ unabhängig voneinander für Wasserstoff oder Methyl stehen.

4. Verfahren zur Herstellung von Polycarbonaten des Anspruchs 1, dadurch gekennzeichnet, daß man

o Mole Bisphenole der Formel (II)

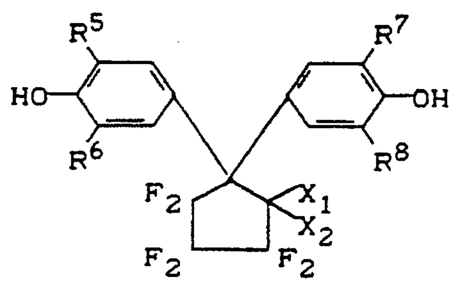
(II),

in der die verwendeten Symbole die in Anspruch 1 angegebene Bedeutung haben,

gegebenenfalls unter Zusatz von n Molen Bisphenolen der Formel (III)

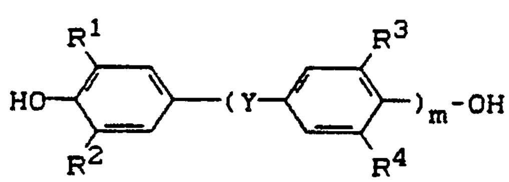
(III),

in der die verwendeten Symbole die in Anspruch 1 angegebene Bedeutung haben,

mit mindestens p Molen Phosgen, $COBr_2$ und/oder einem Bischlorkohlensäureester

gegebenenfalls unter Zusatz von Katalysatoren, Kettenabbrechern und/oder Verzweigungsmitteln

umsetzt und dabei die Bedingungen einhält

$n + o \geqq p$
$o: (n + o) = 0{,}01$ bis 1.

**5.** Verfahren nach Anspruch 1, dadurch gekennzeichnet, daß man als Katalysatoren tertiäre Amine oder quarternäre Ammoniumsalze einsetzt.

**6.** Verfahren nach Anspruch 4, dadurch gekennzeichnet, daß man als Kettenabbrecher Monophenole einsetzt.

**7.** Verfahren nach Anspruch 4, dadurch gekennzeichnet, daß man als Verzweigungsmittel Tri- und Tetraphenole oder Tri- und Tetracarbonsäurechloride einsetzt.

**8.** Verfahren nach Ansprüchen 4 bis 7, dadurch gekennzeichnet, daß man zunächst das oder die Bisphenole der Formeln (II) und gegebenenfalls (III) mit einer wäßrig-alkalischen Lösung zusammenbringt, dann ein Lösungsmittel für Polycarbonate zufügt, dann unter Rühren bei Temperaturen von 0 bis 100 °C Phosgen, $COBr_2$ oder einen Bischlorkohlensäureester zufügt, dabei den pH-Wert des Reaktionsgemisches auf 10 oder höher hält und, gegebenenfalls nach Waschen der organischen Phase, das gebildete Carbonat gewinnt, indem man es aus der organischen Phase ausfällt oder das Lösungsmittel ganz oder teilweise verdampft bzw. abzieht.

**9.** Verwendung von Polycarbonaten des Anspruchs 1 bei der Herstellung optischer Vorrichtungen.

**10.** Mischungen enthaltend Polycarbonate des Anspruches 1 und andere Thermoplaste.